(19) Europäisches Patentamt
European Patent Office
Office européen des brevets

(11) EP 1 545 066 B1

(12) EUROPEAN PATENT SPECIFICATION

(45) Date of publication and mention
of the grant of the patent:
**02.10.2013 Bulletin 2013/40**

(51) Int Cl.:
***H04L 29/02*** *(2006.01)*

(21) Application number: **04105798.5**

(22) Date of filing: **16.11.2004**

(54) **Systems and methods that employ process algebra to specify contracts and utilize performance prediction implementations thereof to measure the specifications**

Systeme und Verfahren zur Vertragsspezifizierung und zur Messung der Spezifikationen unter Benutzung von Prozessalgebra und anhand von Leistungsvorhersagen

Sytèmes et procédés basés sur une algèbre de processus et des applications de prédiction de performance pour spécifier des contrats et mesurer les spécifications

(84) Designated Contracting States:
**AT BE BG CH CY CZ DE DK EE ES FI FR GB GR HU IE IS IT LI LU MC NL PL PT RO SE SI SK TR**

(30) Priority: **10.12.2003 US 528758 P**
**30.07.2004 US 903959**

(43) Date of publication of application:
**22.06.2005 Bulletin 2005/25**

(73) Proprietor: **MICROSOFT CORPORATION**
**Redmond, WA 98052 (US)**

(72) Inventors:
• **Meredith, Lucius Gregory**
**98052, Redmond (US)**
• **Brown Jr., Allen L.**
**98052, Redmond (US)**
• **Richter, David**
**98052, Redmond (US)**

(74) Representative: **Grünecker, Kinkeldey,**
**Stockmair & Schwanhäusser**
**Leopoldstrasse 4**
**80802 München (DE)**

(56) References cited:
**EP-A- 1 385 094          WO-A-02/17065**
**WO-A-2004/031970     US-B1- 6 516 322**

**Description**

The present invention generally relates to network services, and more particularly to systems and methods that express a rate, uptime and/or capacity of a service request and/or an advertised service provider.

Continued advancements in computer and networking technologies have transformed the computer from a high-cost, low performance data processing machine to a low cost and efficient communications, problem solving and entertainment system that has revolutionized the manner in which personal and business related tasks are performed each day. Examples of such tasks include basic correspondence, purchasing goods, providing goods, gathering information, requesting services, providing services, etc. Traditionally, personal tasks such as corresponding with friends and family required a person to obtain paper, a writing utensil, an envelope and a stamp, generate a hardcopy of the correspondence, and deposit the letter in the mail. The foregoing generally required the consumer to expend money and time and necessitated travel to obtain supplies and/or mail the letter. Additionally, the recipient would not receive the letter until hours or days later, depending on how much the sender was willing to pay for a mailing service. Conventional business transactions commonly involve several phone conversations, paper communication (e.g., mail and fax), and/or in-person interaction with one or more parties; and, in some instances, one or more of the parties could turn out  not to be a suitable partner, for example, due to cost, proximity or inability to meet transaction needs.

Today, an increasing number of personal and business transactions are likely to be facilitated and/or performed with computer and networking technologies. For example, correspondence, bill paying, shopping, budgeting and information gathering can all be achieved with the assistance of a computer connected to an appropriate network and with suitable user privileges. By way of example, a consumer/ provider can obtain a computer (e.g., a desktop computer, a laptop, a hand- held, a cell phone, etc.) and interface it with a network such as a LAN, a WAN, a Wi- Fi network, the Internet, etc. The network can provide a communications link from the computer to one or more other computers (e.g., servers), which can be located essentially anywhere throughout the world. This link can be utilized to exchange data, consume merchandise, and access a wealth of information residing in a repository of data banks, for example. Another advantage of such communication is that it can be utilized at the convenience of one's home, at the user's fingertips or a click of a mouse button, and, at many times, at no or minimal expense to the user.

A growing trend is to leverage the benefits of the web domain to facilitate completing personal and business transactions since the web domain can provide user-friendly interface, a relatively secure environment, interoperability, and a developer-friendly environment, for example. In the web domain, services associated with various web sites and/or disparate web servers can be accessed through a web browser. For example, a web user can deploy a web browser and access a web site by entering the site's Uniform Resource Locator (URL) into an address bar of the web browser. A typical URL includes at least four pieces of information that facilitate establishing a link to the web site. Namely, the URL can include a protocol (a communications language) that indicates a set of rules and standards for information exchange, an address or location of the web site, a name of an organization that maintains the web site, and a suffix (e.g., com, org, net, gov and edu) that identifies the type of organization. As an example, an exemplary fictitious address http://www.foo.com can be delineated as follows: "http" can specify that the web server utilizes Hypertext Transfer Protocol (HTTP); *"://"* is standard URL syntax; "www" can specify the web site resides within the  World Wide Web ("web"); "foo" can specify the web server is located at Foo Corporation; "com" can specify that Foo Corporation is a commercial institution; and "." is utilized as a separator between the foregoing fields.

This distributed means of communication (communication between computers residing at disparate locations) over the Internet has lead to a concept referred to as a "web service." In general, a web service can be defined as an application that executes in connection with the web to provide a mechanism to locate and select a service provider to carry out a task or to provide such services. In many instances, communication amongst such services includes providing information related to the task and/or services offered by disparate users. Such information can be utilized to facilitate matching a service that is requesting a provider with a suitable service provider. Conventional techniques provide a basic framework for such matching; however, there is a need for an enhanced approach that provides richer information to improve matching service requests with suitable service providers.

WO 02/17065 A2 concerns a system for building, provisioning and executing one or more electronic service level agreements (eSLAs), which specify and enforce service contracts for Web and other computer hosting services. Specifically, an eSLA is constructed between a service provider and a client based on client input for an application associated with the first client to be hosted by the service provider where the consistency of the eSLA is checked with respect to one or more existing eSLAs previously committed to by the service provider. The electronic service level agreement is modified when at least one inconsistency is found. The method further comprises the step of determining whether the electronic service level agreement will be satisfied for a given workload based on historical data. An eSLA may specify (1) workload types, (2) metrics used to characterize the service level, (3) a methodology for monitoring workload and service metrics, (4) a set of conditions/rules that indicate a violation of the service agreement and (5) penalties associated with violation of the contract terms.

US 6 516 322 B1 concerns a method for encoding a mobile process algebra in XML by providing a mobile process algebra when using the process algebra to infix notation transforming the mobile process algebra from an infix notation to a prefix notation and then transforming the prefix notation to a set of tags, via structural induction.

EP 1 385 094 A concerns an apparatus and method for predicting performance of a distributed system such as an ICT network. The system comprises an input module for receiving input of said distributed system where the input includes at least a description of application processes; a model builder for translating the input into a layered mathematical model of the distributed system; a performance calculation module that calculates performance metrics for the distributed system using the layered mathematical model and an output module.

WO 2004/031970 A concerns the safe interoperability among web services. The system comprises a first web service for offering computing services and a second web service that desires the computing services offered by the first web service.

It is the object of the present invention to provide an improved method for selecting a service provider, as well as a corresponding system and computer-readable medium.

This object is solved by the subject matter of the independent claims.

Preferred embodiments are defined by the dependent claims.

The following presents a simplified summary of the invention in order to provide a basic understanding of some aspects of the invention. This summary is not an extensive overview of the invention. It is intended to neither identify key or critical elements of the invention nor delineate the scope of the invention. Its sole purpose is to present some concepts of the invention in a simplified form as a prelude to the more detailed description that is presented later.

The present invention provides a novel approach to specifying and checking a contract. The systems and methods employ a stochastic-pi technology as a specification mechanism and performance prediction technology as an implementation to be measured against the specification. In this way, a contract can be specified in a fragment of stochastic-pi and an implementation checked against it. The present invention leverages a stochastic pi calculus to explicitly associate rates to actions, wherein semantics admit a Gillespie-style stochastic agent-based simulation. In addition, the present invention leverages stochastic pi calculus enhanced operational semantics, which allow one to associate proof-trees with transitions in a labeled transition system corresponding to an execution of a pi-calculus process. Moreover, the present invention leverages a technique that provides a cost function that compositionally maps such proof-trees to numbers that represent rates.

The present invention includes systems and methods that provide rich information related to a quality of service, including rate, uptime and/or capacity. Such performance can be associated with a request and specify a level of required performance to service the request and/or services provided such as a level of performance offered to service a request. Service performance can be determined and/or represented utilizing mathematics such as a stochastic calculus (e.g., process algebra). Examples of suitable mathematics include, but are not limited to, pi and rho calculus and derivations thereof. In addition, service performance can be included in a description (e.g., a contract), along with information that describes message content, service location, communication protocols, etc. In general, service performance specified and/or predicted for a requesting agent and a service-providing agent can be compared to determine whether the provider can satisfy the requested level of performance. The foregoing approach provides novel enhancements over conventional techniques, which typically do not utilize stochastic calculus to provide rich performance data such as rate, uptime and/or capacity for agents.

In one aspect of the present invention, a system that facilitates expressing service performance for an agent (e.g., a web service) is illustrated. The system comprises a service manager component that allows a user of the agent to specify a level of performance for the agent. This level of performance can determine a minimum, desired and/or required level of performance sought by the user to service the agent (or a request from the agent) or the level of performance employed by the agent to service a request. The level of performance can be generated by and/or represented as a mathematical algorithm (e.g., via process algebra such as a stochastic calculus like pi and/or rho calculus), which can compute and/or predict the level of performance for the request or the service, which provides an objective measure of the quality of requested and/or provided services. The level of performance can be utilized to indicate criteria such as rate, uptime, and/or capacity, for example.

In another aspect of the present invention, the performance expressing system further includes a description component that can store a description of a level of performance and an implementation component that can store an implementation of the description. The description can include information related to rate, uptime and/or capacity, as well as other information. A description stored in the description component can be compared with performance descriptions of other agents to determine whether the agents are functionally equivalent. This comparison typically is facilitated with a compliance algorithm. In addition, such description can be compared with an implementation stored in the implementation component to determine whether a service provider is capable of satisfying a quality of performance specified by an agent. This comparison can be facilitated with a conformance algorithm. Any agent can selectively advertise their description and/or implementation thereof to other agents.

In yet other aspects of the present invention, systems depicting negotiating agents are illustrated. At least one of the negotiating agents can transmit an "ask" for a service with a specified level of performance. The "ask" can be utilized by at least one of the other agents to determine whether such agent can satisfy the specified level of performance. In addition, at least one of the agents can transmit a "bid," which advertises a level of performance offered to handle a request from one of the other agents. Moreover, the "bid" can be associated with a cost so that any agent receiving the "bid" is apprised of the cost associated with the offered services. Both levels of performance provided in the "ask" and "bid" and comparisons thereof can be determined via process algebra. In addition, rate, uptime and capacity components can be employed to determine rate, uptime and capacity, respectively, for the agents. This information can be incorporated into the "ask" or "bid" to facilitate determining whether an "ask" can be satisfied by a "bid."

In still other aspects of the invention, models and methodologies for utilizing levels of performance are illustrated. The models include representing various states of a contract and decorating state transitions to determine performance criteria such as rate, uptime and capacity, for example. The methodologies provide exemplary acts that facilitate determining and/or utilizing levels of performance for negotiating agents. Similar to the systems, the models and methodologies utilize process algebra.

The following description and the annexed drawings set forth in detail certain illustrative aspects of the invention. These aspects are indicative, however, of but a few of the various ways in which the principles of the invention may be employed and the present invention is intended to include all such aspects and their equivalents. Other advantages and novel features of the invention will become apparent from the following detailed description of the invention when considered in conjunction with the drawings.

BRIEF DESCRIPTION OF THE DRAWINGS

FIG. 1 illustrates a system that facilitates expressing performance.

FIG. 2 illustrates a system that employs a performance definition and an implementation thereof to facilitate expressing a quality of service for an agent.

FIG. 3 illustrates two agents negotiating with respective performance definitions.

FIG. 4 illustrates an exemplary market place of negotiating agents.

FIG. 5 illustrates an agent employing a component that utilizes process algebra to predict rates that describe a quality of service.

FIG. 6 illustrates an agent employing a component that determines an uptime metric associated with a quality of service.

FIG. 7 illustrates an agent employing a component that determines a channel capacity quality of service metric.

FIG. 8 illustrates an exemplary model that can be utilized to describe various states of a contract in accordance with the present invention.

FIG. 9 illustrates an exemplary contract model that is decorated with cost function to predict rates at respective state transitions.

FIG. 10 illustrates an exemplary methodology for expressing performance.

FIG. 11 illustrates an exemplary methodology that facilitates locating a service provider that offers an acceptable level of performance.

FIG. 12 illustrates an exemplary methodology that determines whether a service provider can satisfy a level of performance.

FIG. 13 illustrates an exemplary networking environment, wherein the novel aspects of the present invention can be employed.

FIG. 14 illustrates an exemplary operating environment, wherein the novel aspects of the present invention can be employed.

DESCRIPTION OF THE INVENTION

As utilized in this application, terms "component," "system," and the like are intended to refer to a computer-related entity, either hardware, a combination of hardware and software, software, or software in execution. For example, a component may be, but is not limited to being, a process running on a processor, a processor, an object, an executable, a thread of execution, a program, and/or a computer. By way of illustration, both an application running on a server and the server can be a component. One or more components can reside within a process and/or thread of execution and a component can be localized on one computer and/or distributed between two or more computers.

The present invention relates to systems and methods that specify a quality of service for agents such as web services. The quality of service can include rate, uptime and/or capacity specifications (e.g., metrics), which can be indicative of performance required/desired to service a request and/or performance available/offered to service a request. Such quality of service specifications can be predicted via techniques that utilize stochastic calculus to determine whether a service-providing agent can satisfy a particular request from another agent. By way of illustration, the systems and methods can employ a stochastic-pi technology as a specification mechanism and performance prediction technology as an implementation to be measured against the specification. For example, a stochastic pi calculus can be utilized to explicitly associate rates to actions, wherein semantics admit a Gillespie-style stochastic agent-based simulation; related enhanced operational semantics can be utilized to associate proof-trees with transitions in a labeled transition system corresponding to an execution of a pi-calculus process; and such proof-trees can be compositionally mapped to numbers that represent rates via a cost function. The foregoing provides a novel technique wherein a contract can be specified in a fragment of stochastic-pi and an implementation checked against it.

The present invention is described with reference to the drawings, wherein like reference numerals are used to refer to like elements throughout. In the following description, for purposes of explanation, numerous specific details are set forth in order to provide a thorough understanding of the present invention. It may be evident, however, that the present invention may be practiced without these specific details. In other instances, well-known structures and devices are shown in block diagram form in order to facilitate describing the present invention.

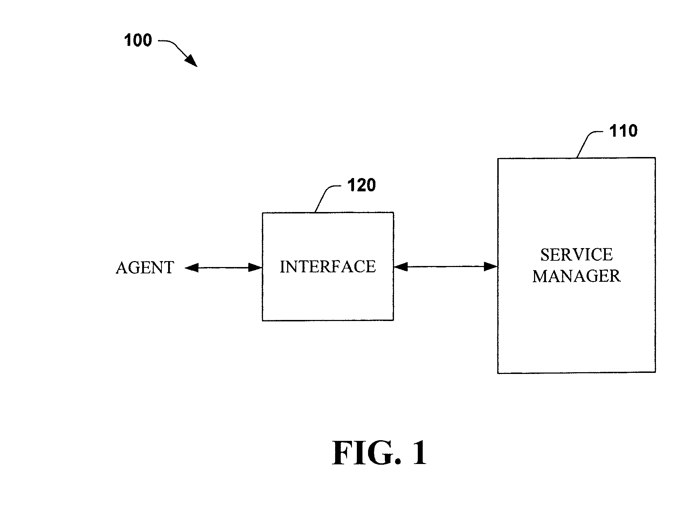

FIG. 1 illustrates a system 100 that facilitates expressing service performance. The system 100 comprises a service manager component 110 that can be utilized to define (e.g., specify, predict, etc.) a level of performance for an agent and an interface component 120 that can couple the service manager component 110 with various agents. Examples of agents that can be employed in accordance with aspects of the present invention include, but are not limited to, agents that can request a service, agents that can service (e.g., handle, process, fulfill, respond to, etc.) a request, and agents that can both request a service and handle a request.

By way of example, a suitable agent can be a state machine that interacts with other components (e.g., other state machines) over a bus or network. Such state machine can transmit a request (e.g., via a signal) for data or processing services. In addition, the state machine can provide data or processing services to another component requesting such services. It is to be appreciated that the bus and/or network utilized can be local to the state machine, common to the state machine and a plurality of other components, or remote from the state machine. In addition, various protocols can be utilized to facilitate communication over the bus and/or network. In another example, the agent can be a client and/or a server in a traditional web server / web page system that utilize graphical user interfaces (GUIs). In yet another example, the agent can be a client and/or a server in a web service environment where business logic, data and processes are shared amongst web services through a programmatic interface and across the network, and web services can be incorporated within a GUI or executable to provide particular functionality. As such, the agent can communicate with one or more other agents (e.g., clients, servers and web services) over various network topologies such as a Large Area Network (LAN), a Wide Area Network (WAN), the Internet, etc. and transport protocols like HyperText Transport Protocol (HTTP), File Transfer Protocol (FTP), and Simple Mail Transfer Protocol (SMTP), for example.

It is to be appreciated that the above examples provide a sample of various types of agents that can be employed in accordance with the present invention and is not an exhaustive list thereof. In addition, it is to be understood that such agents can be represented and/or implemented in software, firmware and/or hardware and distributed over disparate systems or in connection with a single system. For example, an agent can be represented in a markup language such as Extensible Markup Language (XML), HyperText Markup Language (HTML), Dynamic HTML (DHTML), Standard Generalized Markup Language (SGML), Web Services Description language (WSDL), Simple Object Access Protocol (SOAP), etc., and implemented in a programming language such as a C-based language, etc. Moreover, agents as utilized herein are not limited to any particular operating system (OS).

The service manager component 110 can enable a user of the agent with suitable privileges (e.g., the agent owner and an agent administrator, designer, programmer, etc.) to specify a level of performance for the agent. This level of performance can determine a minimum, desired and/or required level of performance sought by the user to service the agent or a request from the agent. In another example, the level of performance can indicate the performance level employed by the agent to service a request. It is to be appreciated that such performance can vary from agent to agent and can be fixed or variable. Variable performance levels can be presented as ranges such that the actual level of performance utilized is based on a requested or selected level of performance and/or available resources. In addition, respective performance levels within a range can be associated with a cost such that a quantity of resources consumed or allocated can additionally be a function of what a requesting agent is willing to pay for a particular level of performance.

It is to be appreciated that the user can manually provide (e.g., upload or generated therein) the level of performance to the service manager component 110 or the level of performance can be self-created via intelligence (e.g., machine learning techniques). In addition, the level of performance can be generated by and/or represented as a mathematical algorithm, which can compute and/or predict the level of performance for a request or a service. In one aspect of the present invention, the mathematical algorithm can be based on process algebra such as a stochastic calculus like pi and/or rho calculus. As such, the level of performance can represent an objective measure of the quality of service requested and/or provided. In addition, the level of performance can indicate various information such as a rate, an uptime, a capacity, etc. as described in detail below.

As noted briefly above, the interface component 120 can couple the service manager component 110 to an agent. It is to be appreciated that the interface component 120 can include various protocols in order to couple essentially any agent and service manager component 110 and provide communication therebetween. In addition, the interface component 120 can be concurrently and/or serially utilized by more than one agent and/or service manager component 110. For example, the service manager component 110 can be coupled via the interface component 120 to more than one agent, wherein it can be utilized to facilitate specifying performance for the more than one agent. In addition, more than one service manager component 110 can be coupled via the interface component 120 to an agent, wherein any service manager component 110 can specify performance for requests from the agent and/or compete to service at least portions of requests from the agent.

In general, conventional systems do not provide for specifying performance (e.g., rate, uptime, capacity, etc.), as described herein, via a formal process language. Instead, such systems typically place the onus on a programmer to compute information such as task rates and manually program such information. Thus, conventional techniques can lack richness and consume limited resources that can be utilized more efficiently by performing other tasks. In addition, conventional techniques are susceptible to computation error and/or programmer subjectivity.

The present invention can mitigate such issues by utilizing process algebra to predict (e.g., via performance prediction technology as described herein) an objective metric that can be utilized to compare a level of performance to handle a request with a level of performance a service provider offers to service the request. Thus, a level of performance can be specified for requesting or servicing agents and such performance can be utilized during negotiations between agents to facilitate efficient and reliable handling of requested services by comparing the predicted level of performance with the specified level of performance. In one aspect of the present invention, a stochastic pi calculus and associated operational semantics are utilized to explicitly associate rates to actions and proof-trees with transitions in a labeled transition system corresponding to an execution of a pi-calculus process, wherein the proof-trees can be compositionally mapped to numbers that represent rates via a cost function. The foregoing enables a contract to be specified in a fragment of stochastic-pi and an implementation checked against it.

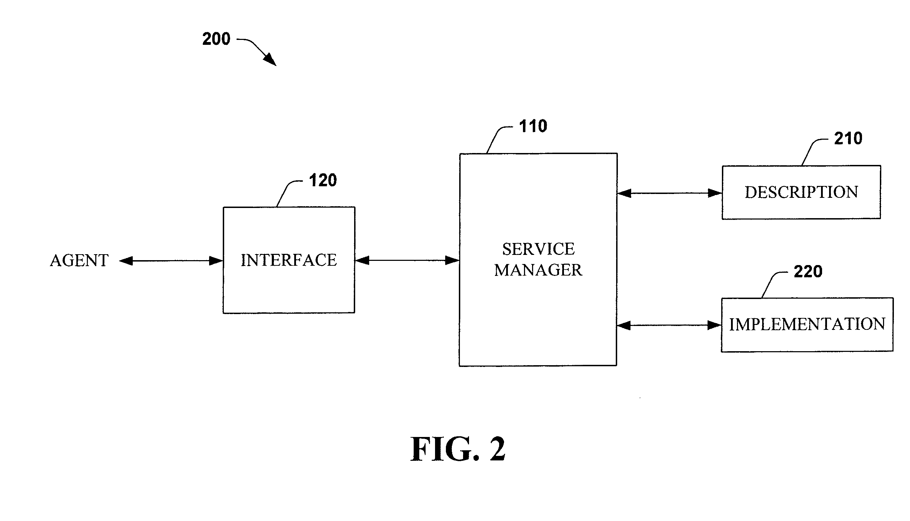

FIG. 2 illustrates a system 200 that facilitates expressing service performance. The system 200 comprises the service manager component 110 and the interface component 120, and, additionally, a description component 210 and an implementation component 220. As noted above, the service manager component 110 facilitates specifying a level of performance requested for servicing an agent and/or a level of performance provided by an agent to service requests. Such performance can be determined via a process algebra (e.g., pi and rho calculus), which provides an objective measure that can be utilized as negotiation criteria between a service requesting agent and a service providing agent.

The description component 210 can be utilized to store a description of a level of performance (e.g., specified, predicted, etc.) and the implementation component 220 can be utilized to store an implementation of the description. This description can include information related to a specified rate, uptime and/or capacity, as well as other information. In general, rate can be utilized to indicate an amount of resources requested from providers by an initiator of the request and/or an amount of resources an agent provider is willing to expend for servicing such a request. Uptime can be utilized to indicate a handling delay (e.g., due to an error) that a requestor is willing to accept or an estimated delay in servicing a request by a provider. Capacity typically indicates an amount of data that can be processed at any given time.

An agent requesting a service can utilize this parameter in order to ensure that a provider is capable of handling its request and an agent providing a service can utilize this parameter to advertise its capacity capability. The advertisement can include whether the provider capacity is dependent upon handling other requests. For example, the provider may concurrently handle multiple requests in parallel, wherein its capacity at any given time is based on the number of other requests being handled at that time. Where requests are handled in series, the advertisement can indicate whether processing is time-sliced for multiple requests or whether respective requests are serviced prior to processing another request.

A description stored in the description component 210 can be compared with performance descriptions (e.g., specified, predicted, etc.) of other agents to determine whether the description is functionally equivalent to another description. This comparison typically is facilitated with a compliance mathematical algorithm. In addition, such description can be compared with an implementation stored in the implementation component 220. This comparison can be facilitated with a conformance algorithm and can determine whether a service provider is capable of satisfying the quality of performance specified by an agent.

It is to be appreciated that the service manager 110 can selectively reveal performance descriptions and/or description implementations to other agents. For example, a typical agent can reveal a performance description for other agents to view while preventing access to description implementations. This facilitates negotiation between agents by allowing an agent looking for a service provider to eliminate providers that do not at least profess to render a performance level that can meet the performance level of the request. Similarly, a service provider can compare its performance with competing service providers and with agent requests to determine whether its level of performance is competitive and can satisfy the request.

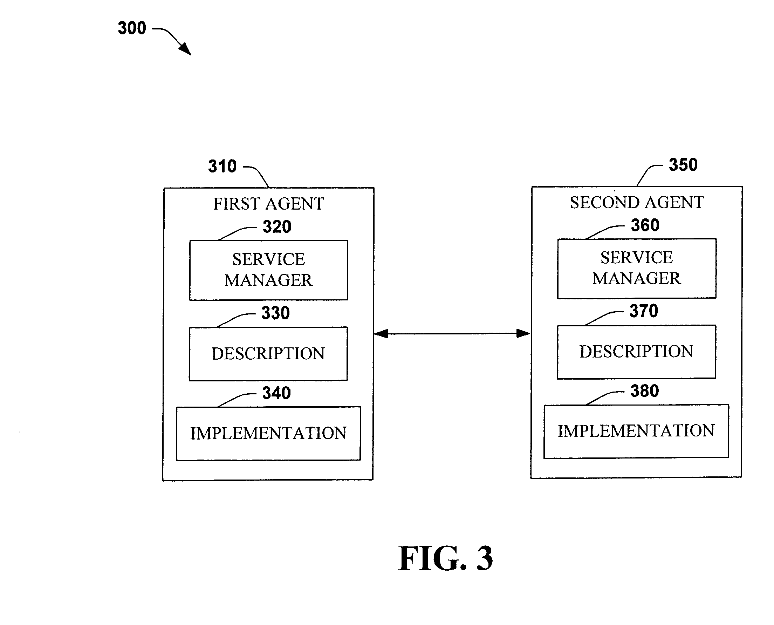

FIG. 3 illustrates a system 300 with two agents communicating with one another. The system 300 includes a first agent 310 that comprises a first service manager component 320, a first description component 330 and a first implementation component 340. The system 300 further includes a second agent 350 that comprises a second service manager component 360, a second description component 370 and a second implementation component 380. It is to be appreciated that the service manager components 320 and 360, the description components 330 and 370, and the implementation components 340 and 380 can be substantially similar to the service component 110 (FIG. 1), the description component 210 (FIG. 2), and the implementation component 220 (FIG. 2).

As noted in connection with the system 100 (FIG. 1), an agent as utilized herein can be an entity that can request a service and/or service a request. Thus, the first agent 310 can transmit a request to the second agent 350 for a service, wherein the second agent 350 can handle the request. Furthermore, the second agent 350 can transmit a request to the first agent 310 for a service, wherein the first agent 310 can handle the request. For explanatory purposes and sake of brevity, the following description illustrates an exemplary scenario wherein the first agent 310 behaves as a client that desires a service and the second agent 350 is utilized as a service provider that can fulfill such request. However, one of ordinary skill in the art will understand that this scenario does not limit the invention.

The first service manager component 320 of the first agent 310 can facilitate advertising a definition of the requested service. Such definition can be referred to as a contract and typically is stored in the first description component 330. In addition, the definition can include, inter alia, information such as a description of message content, a location of the second agent 350, one or more communication protocols that can be employed to communicate with agents such as the second agent 350, and a performance quality of service expected from a servicing agent such as the second agent 350. The performance quality of service typically is provided by a user of the first agent 310 and can specify information related to a desired or required rate, uptime and/or capacity, for example. In one instance, the user of the first agent 310 can specify the rate that should be met by the second agent 350 before the first agent 310 utilizes the services offered by the second agent 350. In another instance, the user of the first agent 310 can specify an acceptable uptime associated with a delay in servicing the request. In yet another instance, the user of the first agent 310 can specify a capacity that can reflect a quantity that the second agent 350 can and is willing to process at any given time. Moreover, any suitable combination of performance related indicia can be requested and/or provided.

The first service manager component 320 can provide the definition to the second agent 350 as an "ask," which can be used by the second agent 350 to agree to provide the specified level of performance, return a counter offer, or indicate that it is unable to satisfy the specified level of performance. Alternatively, the first service manager component 320 can obtain a definition associated with the second agent 350 to determine whether the level of performance offered by the second agent 350 can satisfy the specified level of performance in its definition.

The second service manager component 360 of the second agent 350 can facilitate advertising a definition of services provided. Similarly, this definition can be referred to as a contract and typically is stored in the second description component 370. In addition, the definition can include information such as a description of message content, a location of the first agent 310, one or more communication protocols that can be employed to communicate with agents such as the first agent 310, and/or a performance quality of service provided to other agents such as the first agent 310, for example. Like the performance quality of service associated with the first agent 310, the performance quality of service of the second agent 350 can specify information indicative of rate, uptime and/or capacity, for example.

The second service manager component 360 can provide its definition to the first agent 310 as a "bid," which can be used by the first agent 310 to determine whether the second agent 350 can satisfy its specified level of performance. If not, the first agent 310 can notify the second agent 350 that the offered level of performance is not adequate. Alternatively, the first agent 310 can accept a lower level of performance (e.g., where a task needs to be handled and no servicing agent provides the desired level of performance) or the first agent 310 can return an "ask" with a different level of performance, wherein the second agent 350 can adjust its "bid" or revoke the counter-offer.

The implementation components 340 and 380 typically provide corresponding implementations for their associated definitions. Typically, such implementations are hidden from other agents. However, an agent can expose its implementation to another agent, if desired. For example, the second agent 350 can provide an implementation of its definition to the first agent 310. The first agent 310 can then utilize a conformance algorithm to determine whether the implementation can satisfy its specified level of performance. In addition, the first agent 310 can utilize a compliance algorithm to determine whether the definition of agent 350 is a functional equivalent of its definition. Similarly, the second agent 350 can determine conformance and/or compliance with the implementation of definition and/or the definition associate with the first agent 310.

It is to be appreciated that users of the agents 310 and 350 can manually provide (e.g., upload or generated therein) the level of performance or the level of performance can be self-created via intelligence (e.g., via probabilities, inferences, statistics, etc.). In addition, the level of performance can be predicted via a mathematical algorithm. Such algorithm can be based on mathematics of stochastic calculus, for example, process algebra such as a pi or rho calculus. As such, the level of performance can be an objective metric of the quality of service requested and/or quality of service provided. In addition, the performance levels can be static or dynamic. Thus, an "ask" and a "bid" can be a pre-set indicator that determines whether a service can satisfy a specified level of performance or it can dynamically change based on a negotiation between agents. In addition, the "bid" can be associated with a cost so that the requesting agent (e.g., the first agent 310) is apprised of the cost associated with services rendered.

The communication channel between the agents 310 and 350 can be virtually any communication channel.

For example, the channel can be hard wired, radio frequency (RF), Infrared (IR), electromagnetic, optical, etc. In addition, the channel can be uni or bi-directional, full or half duplex, and/or single or multiplexed. In addition, the data can exchanged can be encoded, encrypted, compressed, modulated, encompassed in an envelope, etc. Moreover, the channel can be part of a private or public bus or network (e.g., LAN or WAN) and can be interfaced with the Internet for availability from essentially from anywhere in the world.

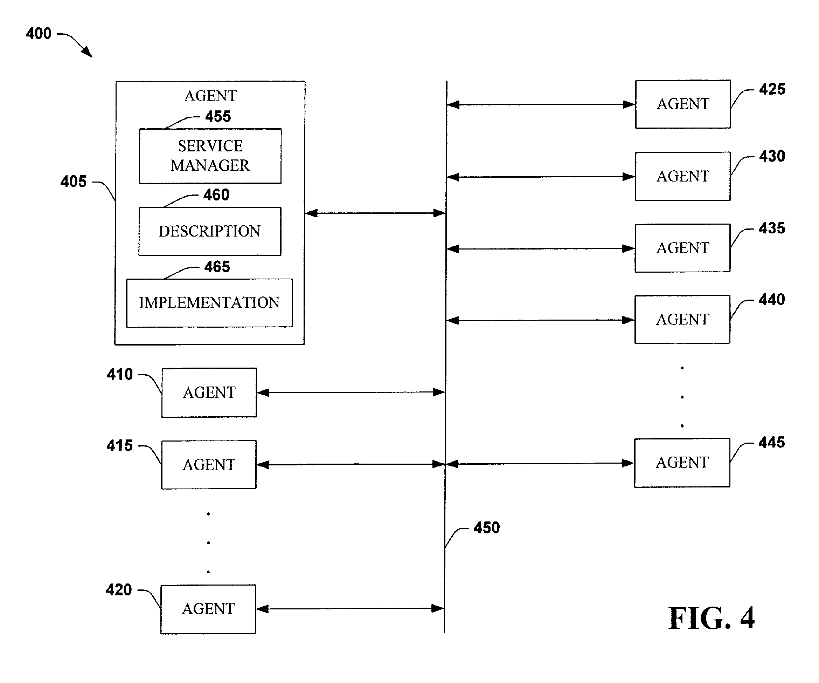

FIG. 4 illustrates a system 400 that depicts a plurality of communicating agents 405-445. Respective agents 405-445 can be coupled to a network 450. As described in detail above, agents herein can include a contract with a definition that comprises at least a level of performance for a request. This level can be associated with a performance required to service the request and/or a performance rendered during servicing the request. In addition, such agents can include an implementation of a definition. It is to be appreciated that the agents 405-445 can negotiate (e.g., via definitions, implementations of definitions, etc.) with one another over the network 450 to create a market place of agents searching for service providers and agents providing services.

By way of example, the service manager component 455 of the agent 405 can facilitate transmission of a request for a service, wherein the request includes an indication of a level of performance (e.g., including at least one of rate, uptime and capacity) associated with handling the request. As noted previously, such level can be specified by a user of the agent 405 and stored, along with other information, as a contract and/or in a description component 460. In addition, an implementation of the contract can be stored in an implementation component 465. The request from the agent 405 can be broadcast over the network 450 to any or all of the agents 410-445, which can at least access a level of performance associated with the request. Likewise, one or more of the other agents 410-445 can broadcast offered levels of performance (including at least one of rate, uptime and capacity) to the agent 405 in order to indicate a performance associated with handling the request. This level of performance can be specified by a user of the one or more agents 410-445, stored in respective description components, and associated with corresponding implementations.

The specified level of performance for the request and any specified performance levels for servicing the request can be utilized to facilitate selection of a suitable agent to service the request. In one instance, none of the agents 410-445 offer a level of performance that meets the request. Here, the user of the agent 405 and/or the agent 405 can adjust its specified level of performance, one or more of the servicing agents 410-445 (or user thereof) can adjust its level of performance, or the request can be withdrawn from consideration. In another aspect of the present invention, one or more of the agents 410-445 may be able to meet or exceed the level of performance specified for the request. The agent 405 can then select one of these agents to provide the service. The selection can be facilitated by considering information such as the cost associated with service from a particular agent. For example, two agents can offer a substantially similar level of performance for disparate costs, wherein the agent 405 can select the less expensive agent. In another example, the agent 405 can determine that the additional cost for performance beyond the specified level adds enough value that such agent is selected over an agent that merely meets the specified level of performance.

It is to be appreciated that respective agents 405-445 can be coupled, individually and/or collectively, to other networks. For example, the agent 405 can be associated with a domain or workgroup where the other agents 410-445 have been excluded. Thus, respective agents 405-445 can concurrently or serially request services or provide services to a plurality of agents residing on a plurality of networks. In some instance, an agent can act as a broker between agents residing on disparate networks. For example, the agent 405 can present a level of performance to the agent 410, which in turn allows agents on a disparate network (not shown) to view this level of performance. If a serving agent on such disparate network can at least meet this level of performance, then the agent 405 can utilize this agent to service the request.

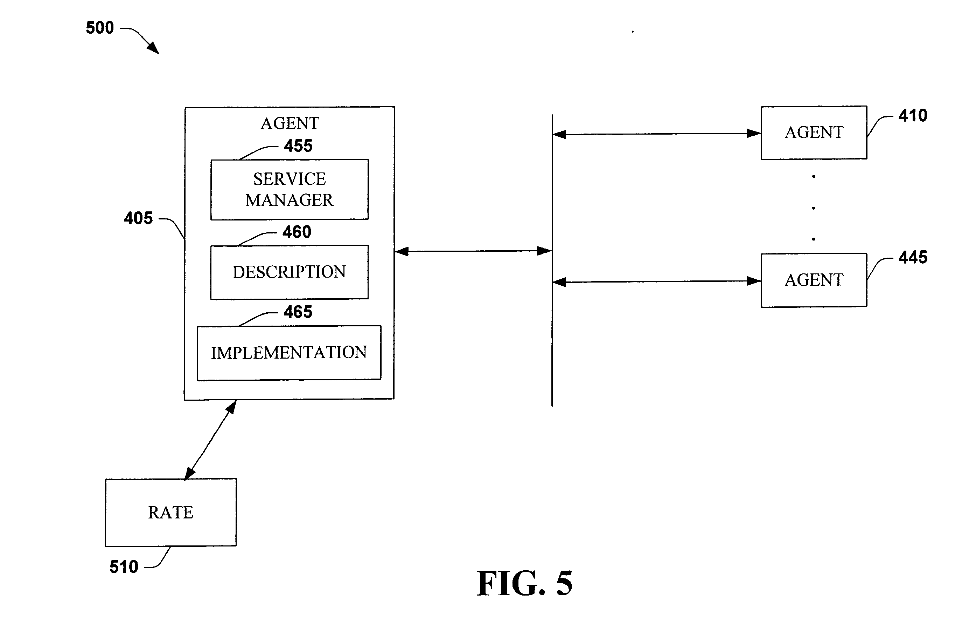

FIG. 5 illustrates a system 500 wherein the agent 405 further includes a rate-predicting component 510. The rate-predicting component 510 can utilize stochastic pi calculus to predict a rate (e.g., a delay, a ratio of probabilities, etc.) associated with a transition from one state to another state in a description of a definition, or contract, stored in a corresponding description component as describe herein. In one aspect of the present invention, at least a subset of pi calculus (e.g., CCS) can be utilized to describe the contract since the contract can be an abstraction of its implementation. For example, pi calculus and cost functions can be utilized to predict the rate at respective transitions. In general, a cost function can be associated with each transition to determine respective cost, wherein a later transition cost typically is an aggregate of costs of former transitions and a current cost, and respective costs are determined by employing cost functions recursively through state transitions. Utilizing pi calculus, these costs can be correlated to a rate such that a corresponding rate is predicted for each transition. These predicted rates can be utilized to determine whether a service provider can satisfy an agent requesting service by comparing predicted rates with advertised rates of service providing agents. By utilizing this rate information, the contracts can be utilized similar to currency in a market place for services. For example, the agent 405 can present a predicted rate to other agents or obtain their rates. In either scenario, the predicted rate of agent 405 can be compared to the rates of other agents to determine if any of the other agents can satisfy the predicted rate of agent 405.

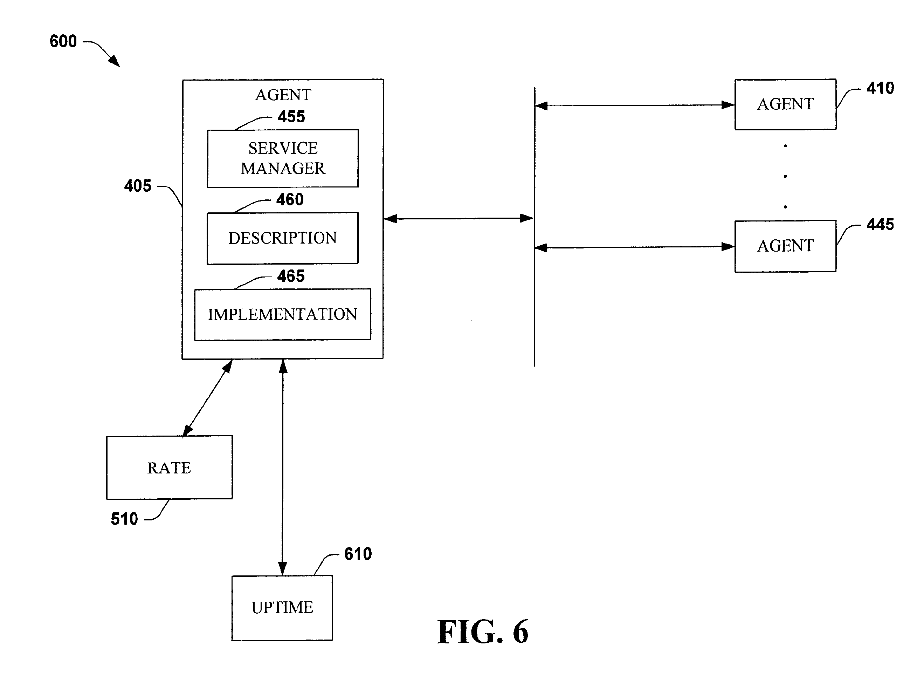

FIG. 6 illustrates a system 600 wherein the agent 405 further includes an uptime component 610, which can be utilized to specify an uptime, delay, and/or error level of performance for respective state transitions. The specified uptime of agent 405 can be compared against the uptime of other agents to determine whether any of the other agents can satisfy the uptime of agent 405. Various techniques can be employed to determine uptime. In one example, one or more error states can be included (e.g., via pi calculus) in a contract definition, wherein transitions from each state can additionally lead to one or more of the error states. Rates can be associated with transitions to the error states and these rates can be utilized to determine the frequency of error for each transition. It is to be appreciated that this error can encompass essentially any down time seen by an agent such as during an exception state, for example, wherein the servicing agent is unable to service the request.

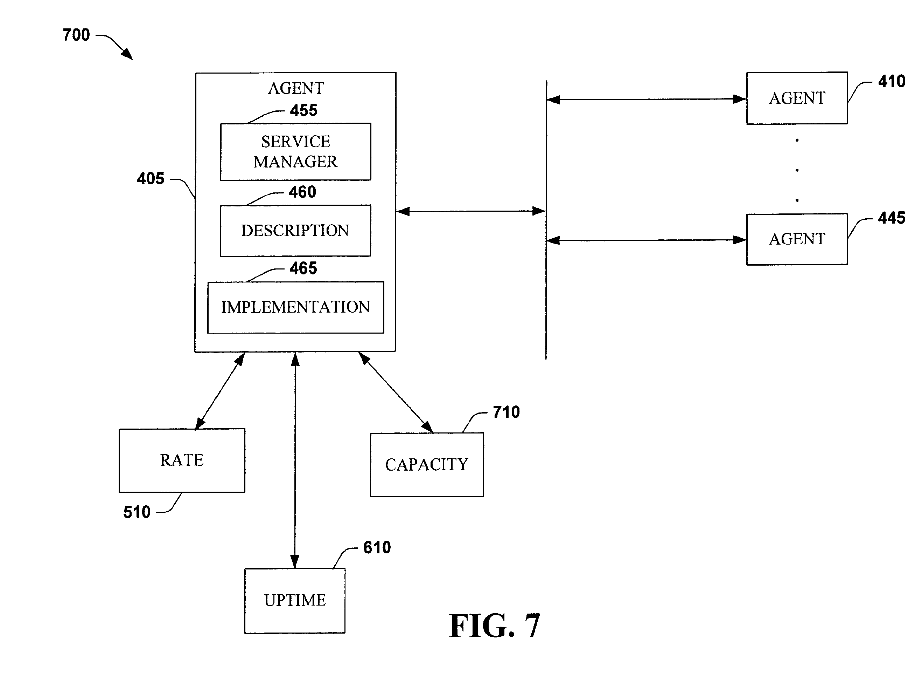

FIG. 7 illustrates a system 700 wherein the agent 405 further includes a capacity component 710, which can be utilized to determine whether a servicing agent can meet or exceed a specified capacity requirement of the agent 405. In one aspects of the present invention, at least a portion of the contract can be represented in terms of messages rather than ports and channel capacity can be determined for respective channels or a particular channel of interest (e.g., utilizing Shannon's theory). In many instance, a channel is associated with one message, wherein the channel is analyzed to determine whether it can carry a message of a particular size. In other instances, a channel can be associated with a plurality of messages. Capacity is determined for such channels depending on whether single messages are conveyed serially or whether a parallel technique is utilized, wherein the sum of the message sizes indicates the capacity.

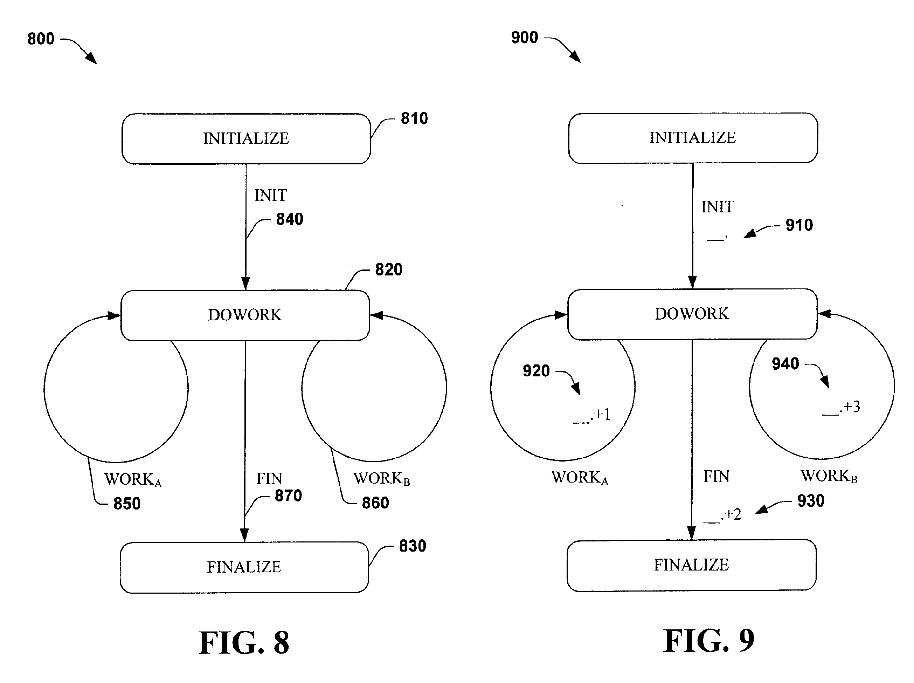

FIGs. 8-9 illustrate contract models in accordance with the present invention. For simplicity of explanation, the models are depicted and described as a series of states. However, it is to be understood and appreciated that the present invention is not limited by such states or the order of the states. Furthermore, not all illustrated states may be necessary to describe the models. In addition, those skilled in the art will understand and appreciate that the models could alternatively be represented as a series of interrelated acts or events.

FIG. 8 illustrates an exemplary model (or proof- tree) 800 that can be utilized to describe a definition of a contract for an agent. The model 800 depicts an "Initialize" state 810, a "DoWork" state 820, and a "Finalize" state 830. The model 800 further indicates transitions (or directives) between such states. For example, a transition (e.g., "init") from the "Initialize" state to the "DoWork" state is illustrated at 840, a first transition (e.g., "work$_A$") from the "DoWork" state to the Finalize" states is illustrated at 850, a second transition (e.g., "work$_B$") from the "DoWork" state to the "Finalize" state is illustrated at 860, and a third transition (e.g., "fin") from the "DoWork" state to the "Finalize" state is illustrated at 870.

The model 800 can be represented mathematically (e.g., in pi calculus) as depicted in Equation 1.

$$\text{Equation 1}: \qquad init.rec.X.(work_A.X + work_B.X + fin),$$

wherein "init" indicates the transition from the "Initialize" state to the "DoWork" state, "rec" indicates that Equation 1 is a recursive function, "work$_A$" represents the first transition, or directive, from the "DoWork" state to the "Finalize" state, work$_B$ represents the second transition from the "DoWork" state to the "Finalize" state, and "Fin" represents the third transition from the "DoWork" state to the "Finalize" state.

The model 800 and/or Equation 1 can be utilized to define a contract as utilized herein. In addition, both the model 800 and Equation 1 can be utilized to determine compliance between two contracts and conformance between a contract and an implementation of the contract by comparing models/equation of respective agents. In addition, the model 800 and/or Equation 1 can be utilized to indicate a quality of service for an agent, as described below.

FIG. 9 depicts a model 900, wherein respective state transitions at 840-870 of the model 800 (FIG. 8) have been decorated with cost functions 910, 920, 930 and 940, respectively, that can be utilized to predict performance. The cost function can be referred to as synchronization contexts, or proved transitions, and can be represented through a process algebra (e.g., pi calculus). The cost associated with respective transitions can be determined by employing the cost functions recursively, for example, from the "Finalize" state to the "Initialize" state. Each cost can be correlated with a rate to predict a rate for each transition. Such predictions mitigate burdening a programmer with determining individual transition rates.

As described previously, uptime can additionally be utilized to specify performance. The model 800 can be expanded by saturating it with error states (not shown). For example, one or more error states can be included, wherein transitions from the "Initialize,' "DoWork," and/or "Finalize" states can additionally be linked to the one or more error states. Respective transitions to the error states can be decorated with rates, as described above, which can be utilized to determine error frequency. With such information, an agent requesting service can specify an acceptable frequency level (e.g., very infrequent). It is to be appreciated that this error can encompass essentially any down town seen by an agent such as during an exception state, for example, wherein the servicing agent is unable to service the request. Moreover, the model 800 and/or Equation 1 incorporate channel capacity, as described above.

After predicting transition rates and optionally determining uptime and channel capacity, the model 800, or its mathematical representation, can be utilized to compare the level of performance sought by an agent with the level of performance advertised by a servicing agent. As noted previously, this facilitates agent negotiations between agents requesting services and agents that handle such request by providing an objective metric that can be determined via a process algebra like pi calculus and mitigates the need for a user of an agent to determine the performance levels (e.g., the rate for each transition).

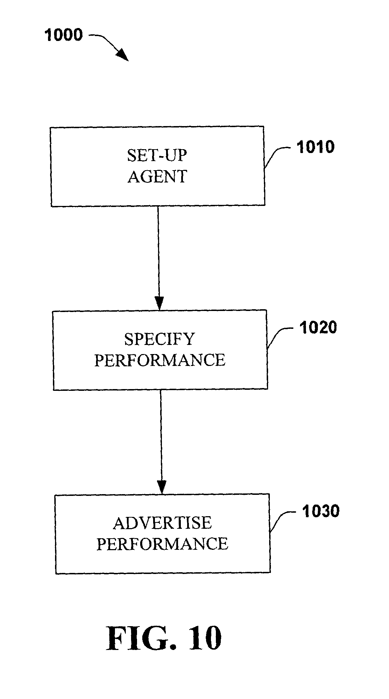

FIGs. 10-12 illustrate methodologies in accordance with the present invention. For simplicity of explanation, the methodologies are depicted and described as a series of acts. It is to be understood and appreciated that the present invention is not limited by the acts illustrated and/or by the order of acts, for example acts can occur in various orders and/or concurrently, and with other acts not presented and described herein. Furthermore, not all illustrated acts may be required to implement the methodologies in accordance with the present invention. In addition, those skilled in the art will understand and appreciate that the methodologies could alternatively be represented as a series of interrelated states via a state diagram or events.

Proceeding to FIG. 10, a methodology 1000 for expressing service performance is illustrated. At reference numeral 1010, an agent is set-up. The agent can be an entity that can utilize another entity to service a request, an entity that can service a request, and an entity that can both request a service and service a request. For example, the user can create a web service that can service the needs of other web services. In another example, the agent can be a client that utilizes web service to handle requests. Moreover, the agent can communicate with other agents over essentially any communications medium.

At 1020, a level of performance is specified (e.g., as described herein) for the agent. Where the agent requests services, the level of performance can indicate information such as a description of message content, a location of a potential servicing agent, one or more communication protocols, and a quality of expected service that can include various performance related indicia such as rate, uptime and/or capacity performance criteria. Similarly, where an agent services requests, a level of performance can indicate information such as a description of message content, a location of a potential requesting agent, one or more communication protocols, and a quality of rendered service that can include rate, uptime and/or capacity offered. Typically, the creator of the agent can specify the foregoing performance information. However, it is to be appreciated that any user with suitable privileges can specify one or more of these parameters.

In general, mathematics can be utilized to determine and/or specify at least a portion of the performance information. Utilizing mathematics provides an object measure that relieves the agent creator or user from the burden of determining information such as rates associated with state transitions. In addition, the mathematics employed mitigates user error and subjective influence in determining such information. An example of suitable mathematics includes process algebra such as a stochastic calculus like pi or rho calculus, which can be utilized to at least facilitate determining rate, uptime, and capacity. Rate can be utilized to indicate an amount of resources requested from providers by an initiator of a request and/or an amount of resources an agent provider is willing to expend for servicing a request. Uptime can be utilized to indicate a handling delay (e.g., associated with an error) that a requestor is willing to accept or an estimated delay in servicing a request by a provider. Capacity typically indicates an amount of data that can be processed at any given time.

At reference numeral 1030, the agent can utilize its specified level of performance to negotiate with other agents. For example, an agent requesting a service can broadcast its performance, wherein servicing agents can respond with an offer to service the request when a service agent can satisfy the broadcast level of performance. This can be determined by comparing the specified level of performance with the service providers offered level of performance. In another example, the agent can observe advertised levels of performance by service providers, compare their desired level of performance with the advertised levels of service performance, and select a service based on the comparison. For an agent providing services, the agent can broadcast the level of performance it is willing to provide to handle a request and/or analyze requests to determine which requests it is capable of handling. Service providers can additionally advertise the cost of their services to facilitate decisions by service requesting agents.

It is to be appreciated that a stochastic-pi technology can be utilized to facilitate specifying the level of performance or another specification mechanism. In addition, a performance prediction technology can be utilized as an implementation to measure against the specification mechanism. In this way, a contract can be specified in a fragment of stochastic-pi calculus and an implementation checked against it. The stochastic pi calculus can be utilized to explicitly associate rates to actions, wherein semantics admit a Gillespie-style stochastic agent-based simulation. Operational semantics can be employed to associate proof-trees with transitions in a labeled transition system corresponding to an execution of a pi-calculus process, wherein a cost function can be utilized to compositionally map proof-trees to numbers that represent rates.

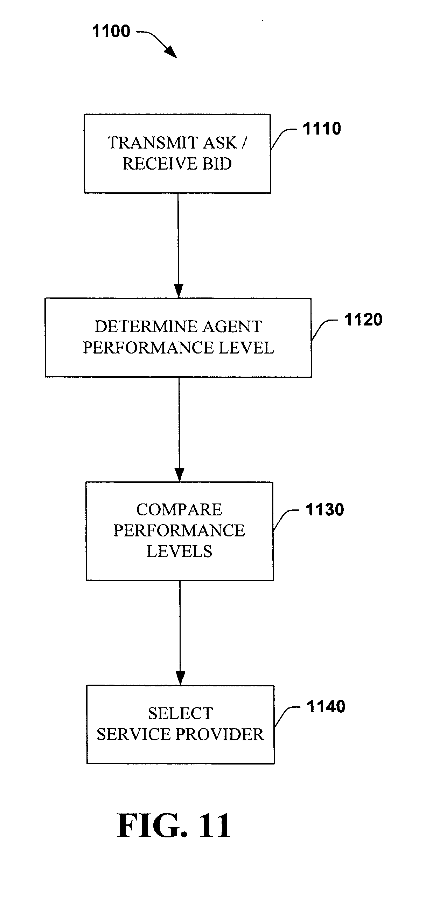

Next at FIG. 11, a methodology 1100 for locating a service provider to handle a request is illustrated. At 1110, an agent either transmits an "ask," which indicates a level of performance sought by the agent or receives "bids" from agent providers, wherein a "bid" indicates performance rendered by an agent provider. The "ask" may be followed by one or more offers from one or more agent providers. At reference numeral 1120, the requesting agent can extract the level of performance of the agent provider. As noted previously, the level of performance of an agent provider typically includes at least a description of message content, a location of requesting agents, one or more communication protocols, a quality of rendered service that can include rate, uptime and/or capacity offered, and a cost of the quality of service. As discussed above, stochastic calculus can be utilized to determine and represent levels of performance.

At 1130, the requesting agent can then compare its level of performance with the level of performance (e.g., specification, implementation, etc.) offered by agent providers to determine whether a provider can satisfy its level of performance. Where multiple providers can satisfy the specified level of performance, other criteria such as the cost of such performance can be utilized to facilitate selecting an agent provider. In addition, intelligence based decisions can be utilized to facilitate selecting a service provider. For example, intelligent based decisions based on statistics, probabilities, a priori information, accumulated historical data, inferences and classifiers (e.g., explicitly and implicitly trained), including Bayesian learning, Bayesian classifiers and other statistical classifiers, such as decision tree learning methods, support vector machines, linear and non-linear regression and/or neural networks can be employed in accordance with an aspect of the present invention. Inference can refer to the process of reasoning about or inferring states of the system, environment, and/or user from a set of observations as captured via events and/or data. At 1140, the requesting agent selects a service provider to service the request.

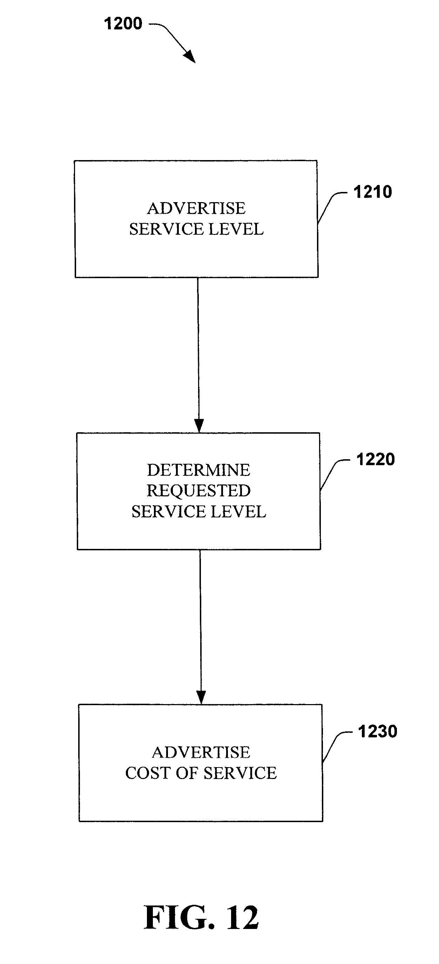

FIG. 12 illustrates a methodology 1200 for servicing a request. At 1210, a servicing agent can advertise its level of performance, as described herein, such that agents requesting services can access its level of performance. In some instances, the advertisement is unsolicited and broadcast such that any agent can ascertain its advertised level of performance. In other instances, the advertisement is in response to a request for service. At reference numeral 1220, the service-providing agent can determine whether it can satisfy the request. This decision can include comparing the level of performance required to service the request with the level of performance available by the service provider. In one instance, the service provider may expose its full bandwidth to servicing a request, whereas in other instances the service provider may limit the amount of resources that it is willing to provide for any one or an aggregate of requests. At 1230, service providers that can at least meet the level of performance of the request can associate a cost with their service. This cost can be provided to the requesting agent to facilitate the requesting agent with rendering a decision between multiple service providers.

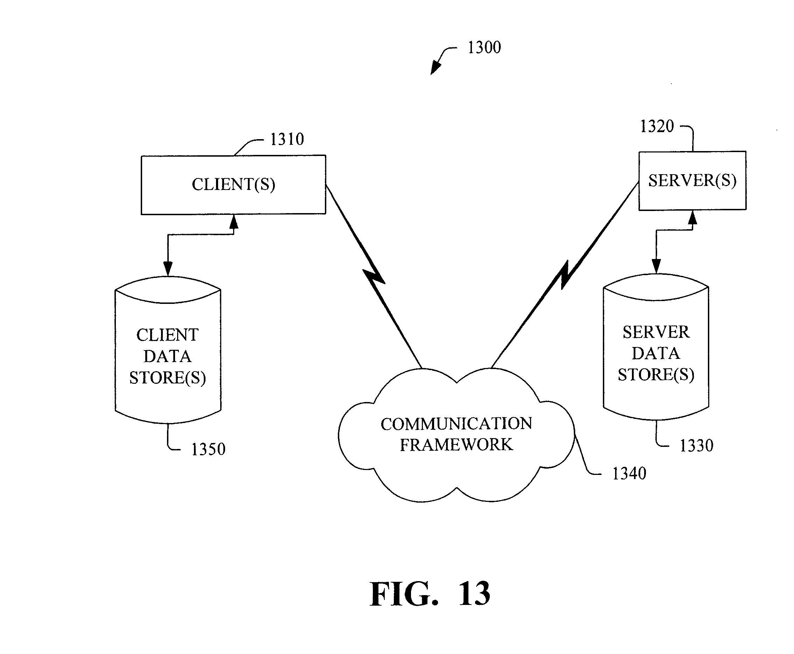

In order to provide additional context for implementing various aspects of the present invention, FIGs 13-14 and the following discussion is intended to provide a brief, general description of a suitable computing environment in which the various aspects of the present invention may be implemented. While the invention has been described above in the general context of computer-executable instructions of a computer program that runs on a local computer and/or remote computer, those skilled in the art will recognize that the invention also may be implemented in combination with other program modules. Generally, program modules include routines, programs, components, data structures, etc., that perform particular tasks and/or implement particular abstract data types.

Moreover, those skilled in the art will appreciate that the inventive methods may be practiced with other computer system configurations, including single- processor or multi- processor computer systems, minicomputers, mainframe computers, as well as personal computers, hand- held computing devices, microprocessor- based *and/ or* programmable consumer electronics, and the like, each of which may operatively communicate with one or more associated devices. The illustrated aspects of the invention may also be practiced in distributed computing environments where certain tasks are performed by remote processing devices that are linked through a communications network. However, some, if not all, aspects of the invention may be practiced on stand- alone computers. In a distributed computing environment, program modules may be located in local and/or remote memory storage devices.

FIG. 13 is a schematic block diagram of a sample-computing environment 1300 with which the present invention can interact. The system 1300 includes one or more client(s) 1310. The client(s) 1310 can be hardware and/or software (e.g., threads, processes, computing devices). The system 1300 also includes one or more server(s) 1320. The server (s) 1320 can be hardware and/or software (e.g., threads, processes, computing devices). The servers 1320 can house threads to perform transformations by employing the present invention, for example.

One possible communication between a client 1310 and a server 1320 can be in the form of a data packet adapted to be transmitted between two or more computer processes. The system 1300 includes a communication framework 1340 that can be employed to facilitate communications between the client(s) 1310 and the server(s) 1320. The client(s) 1310 are operably connected to one or more client data store(s) 1350 that can be employed to store information local to the client(s) 1310. Similarly, the server(s) 1320 are operably connected to one or more server data store(s) 1330 that can be employed to store information local to the servers 1340.

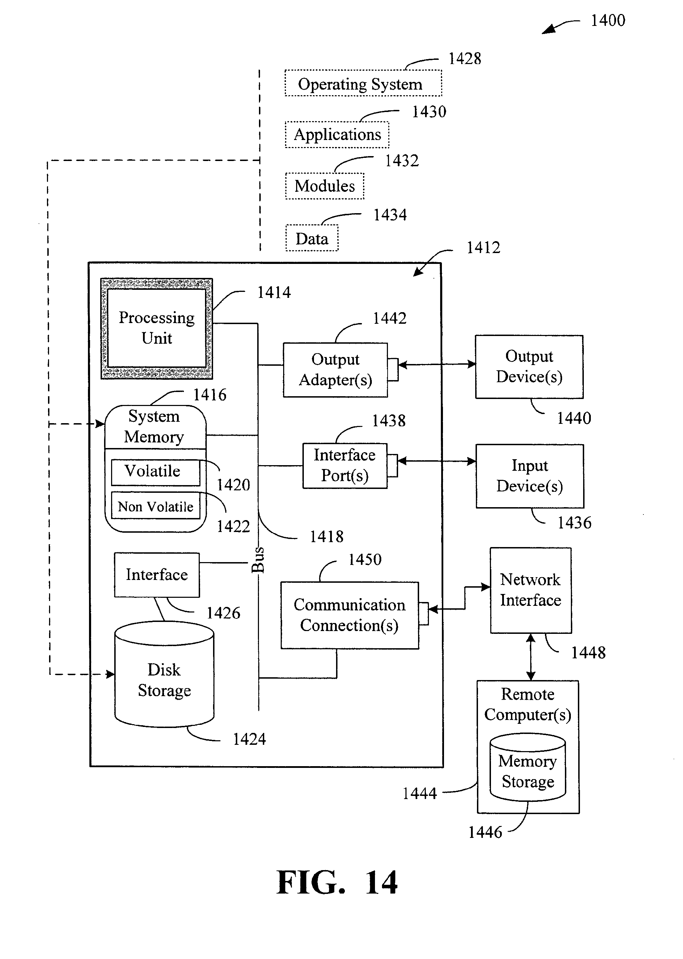

With reference to FIG. 14, an exemplary environment 1400 for implementing various aspects of the invention includes a computer 1412. The computer 1412 includes a processing unit 1414, a system memory 1416, and a system bus 1418. The system bus 1418 couples system components including, but not limited to, the system memory 1416 to the processing unit 1414. The processing unit 1414 can be any of various available processors. Dual microprocessors and other multiprocessor architectures also can be employed as the processing unit 1414.

The system bus 1418 can be any of several types of bus structure(s) including the memory bus or memory controller, a peripheral bus or external bus, and/or a local bus using any variety of available bus architectures including, but not limited to, Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Card Bus, Universal Serial Bus (USB), Advanced Graphics Port (AGP), Personal Computer Memory Card International Association bus (PCMCIA), Firewire (IEEE 1394), and Small Computer Systems Interface (SCSI).

The system memory 1416 includes volatile memory 1420 and nonvolatile memory 1422. The basic input/output system (BIOS), containing the basic routines to transfer information between elements within the computer 1412, such as during start-up, is stored in nonvolatile memory 1422. By way of illustration, and not limitation, nonvolatile memory 1422 can include read only memory (ROM), programmable ROM (PROM), electrically programmable ROM (EPROM), electrically erasable ROM (EEPROM), or flash memory. Volatile memory 1420 includes random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM).

Computer 1412 also includes removable/non-removable, volatile/non-volatile computer storage media. FIG. 14 illustrates, for example a disk storage 1424. Disk storage 1424 includes, but is not limited to, devices like a magnetic disk drive, floppy disk drive, tape drive, Jaz drive, Zip drive, LS-100 drive, flash memory card, or memory stick. In addition, disk storage 1424 can include storage media separately or in combination with other storage media including, but not limited to, an optical disk drive such as a compact disk ROM device (CD-ROM), CD recordable drive (CD-R Drive), CD rewritable drive (CD-RW Drive) or a digital versatile disk ROM drive (DVD-ROM). To facilitate connection of the disk storage devices 1424 to the system bus 1418, a removable or non-removable interface is typically used such as interface 1426.

It is to be appreciated that FIG. 14 describes software that acts as an intermediary between users and the basic computer resources described in the suitable operating environment 1400. Such software includes an operating system 1428. Operating system 1428, which can be stored on disk storage 1424, acts to control and allocate resources of the computer system 1412. System applications 1430 take advantage of the management of resources by operating system 1428 through program modules 1432 and program data 1434 stored either in system memory 1416 or on disk storage 1424. It is to be appreciated that the present invention can be implemented with various operating systems or combinations of operating systems.

A user enters commands or information into the computer 1412 through input device(s) 1436. Input devices 1436 include, but are not limited to, a pointing device such as a mouse, trackball, stylus, touch pad, keyboard, microphone, joystick, game pad, satellite dish, scanner, TV tuner card, digital camera, digital video camera, web camera, and the like. These and other input devices connect to the processing unit 1414 through the system bus 1418 via interface port(s) 1438. Interface port(s) 1438 include, for example, a serial port, a parallel port, a game port, and a universal serial bus (USB). Output device(s) 1440 use some of the same type of ports as input device(s) 1436. Thus, for example, a USB port may be used to provide input to computer 1412, and to output information from computer 1412 to an output device 1440. Output adapter 1442 is provided to illustrate that there are some output devices 1440 like monitors, speakers, and printers, among other output devices 1440, which require special adapters. The output adapters 1442 include, by way of illustration and not limitation, video and sound cards that provide a means of connection between the output device 1440 and the system bus 1418. It should be noted that other devices and/or systems of devices provide both input and output capabilities such as remote computer(s) 1444.

Computer 1412 can operate in a networked environment using logical connections to one or more remote computers, such as remote computer(s) 1444. The remote computer(s) 1444 can be a personal computer, a server, a router, a network PC, a workstation, a microprocessor based appliance, a peer device or other common network node and the like, and typically includes many or all of the elements described relative to computer 1412. For purposes of brevity, only a memory storage device 1446 is illustrated with remote computer(s) 1444. Remote computer(s) 1444 is logically connected to computer 1412 through a network interface 1448 and then physically connected via communication connection 1450. Network interface 1448 encompasses wire and/or wireless communication networks such as local-area networks (LAN) and wide-area networks (WAN). LAN technologies include Fiber Distributed Data Interface (FDDI), Copper Distributed Data Interface (CDDI), Ethernet, Token Ring and the like. WAN technologies include, but are not limited to, point-to-point links, circuit switching networks like Integrated Services Digital Networks (ISDN) and variations thereon, packet switching networks, and Digital Subscriber Lines (DSL).

Communication connection(s) 1450 refers to the hardware/software employed to connect the network interface 1448 to the bus 1418. While communication connection 1450 is shown for illustrative clarity inside computer 1412, it can also be external to computer 1412. The hardware/software necessary for connection to the network interface 1448 includes, for exemplary purposes only, internal and external technologies such as, modems including regular telephone grade modems, cable modems and DSL modems, ISDN adapters, and Ethernet cards.

What has been described above includes examples of the present invention. It is, of course, not possible to describe every conceivable combination of components or methodologies for purposes of describing the present invention, but one of ordinary skill in the art may recognize that many further combinations and permutations of the present invention are possible. Accordingly, the present invention is intended to embrace all such alterations, modifications, and variations that fall within the scope of the appended claims. In particular and in regard to the various functions performed by the above described components, devices, circuits, systems and the like, the terms (including a reference to a "means") used to describe such components are intended to correspond, unless otherwise indicated, to any component which performs the specified function of the described component (e.g., a functional equivalent), even though not structurally equivalent to the disclosed structure, which performs the function in the herein illustrated exemplary aspects of the invention. In this regard, it will also be recognized that the invention includes a system as well as a computer-readable medium having computer-executable instructions for performing the acts and/or events of the various methods of the invention. In addition, while a particular feature of the invention may have been disclosed with respect to only one of several implementations, such feature may be combined with one or more other features of the other implementations as may be desired and advantageous for any given or particular application. Furthermore, to the extent that the terms "includes," and "including" and variants thereof are used in either the detailed description or the claims, these terms are intended to be inclusive in a manner similar to the term "comprising."

**Claims**

1. A computer-implemented system that utilizes a level of performance to facilitate selecting a service provider comprising:

    a first entity (310; 405) adapted to broadcast a request to a plurality of service providing entities (350; 410-445), the request including a level of performance associated with the first entity, the first entity comprising:

    a description component (210; 330; 460) adapted for storing a contract, said contract including a definition of the level of performance associated with the first entity, the level of performance being predicted using a stochastic math-based algorithm; and
    a service manager (110; 320; 455) adapted to utilize the definition to select one of said plurality of service providing entities to service the request, by comparing said definition of the level of performance associated with the first entity to bids advertised by the plurality of service providing entities in response to the request, each of said bids comprising a respective advertised level of performance of the respective service providing entity,

    wherein when none of the advertised levels of performance satisfies the level of performance associated with the first entity, the first entity negotiates with one or more entities from the plurality of service providing entities for a different level of performance that is acceptable to the first entity.

2. The computer-implemented system of claim 1, wherein the level of performance comprises at least one of a rate metric, an uptime metric and a capacity performance metric, said rate metric indicating an amount of resources requested by the first entity.

3. The computer-implemented system of claim 2, wherein the rate metric is predicted with process algebra.

4. The computer-implemented system of claim 3, wherein the process algebra is pi calculus.

5. The computer-implemented system of claim 2, wherein the rate metric is predicted by determining one or more costs of performance and correlating the one or more costs with respective rates.

6. The computer-implemented system of claim 5, wherein the one or more costs are computed by recursively applying respective cost functions over state transitions in the definition.

7. The computer-implemented system of claim 1, wherein a rate metric associated with the first entity is compared with rate metrics of the plurality of service providing entities to determine whether one or more of the plurality of service providing entities satisfy the level of performance of the first entity, wherein the rate metric associated with the first entity indicates an amount of resources requested by the first entity, and wherein the rate metrics of the plurality of service providing entities indicate an amount of resources that the respective one of the plurality of service providing entities is willing to expend for servicing a request.

8. The computer-implemented system of claim 2, wherein the uptime metric indicates a frequency of error that is associated with one of down time and an exception state.

9. The computer-implemented system of claim 2, wherein the uptime metric is computed by decorating transitions to error states with rates and determining a frequency associated with transitions to the error states.

10. The computer-implemented system of claim 2, wherein the uptime metric associated with the first entity is compared with uptime metrics of the plurality of service providing entities to determine whether one or more of the plurality of service providing entities satisfy the level of performance of the first entity.

11. The computer-implemented system of claim 2, wherein the capacity metric indicates a quantity of data that is processed at a given time.

12. The computer-implemented system of claim 2, wherein the capacity metric is computed by applying Shannon's theorem over a channel.

13. The computer-implemented system of claim 1, wherein the first entity and the plurality of service providing entities are web services.

14. The computer-implemented system of claim 11, wherein the definition of the first entity is compared with implementations of defnitions of the plurality of service providing entities through a conformance algorithm to facilitate determining whether one or more of the plurality of service providing entities satisfy the level of performance associated with the first entity.

15. The computer-implemented system of claim 1, wherein the definition associated with the first entity is compared with definitions of levels of performance of the plurality of service providing entities with a compliance algorithm to determine whether the definitions are functional equivalents.

16. The computer-implemented system of claim 1, further comprising:

   a first component adapted to employ process algebra to specify the contract in at least a fragment of the process algebra, and
   a second component adapted to compare the specified contract with an implementation generated via performance predicting techniques, wherein a result of the comparison determines whether the implementation satisfies the contract.

17. The computer-implemented system of claim 16, wherein the process algebra is a stochastic pi calculus.

18. The computer-implemented system of claim 16, wherein the process algebra is associated with semantics that provide for a Gillespie-style stochastic agent-based simulation.

19. The computer-implemented system of claim 16, wherein the process algebra includes operational semantics that associate proof-trees with transitions in a labeled transition system corresponding to an execution of process algebra based process.

20. The computer-implemented system of claim 19, wherein the process algebra based process is a pi calculus process.

21. A computer-implemented method that utilizes a level of performance to facilitate selecting a service providing agent, comprising:

   employing a stochastic math-based algorithm to predict a level of performance for an agent (310; 405) requesting a service;
   broadcasting (1110), by the service requesting agent, a request to a plurality of service providing agent (350; 410-445), the request including the level of performance for the service requesting agent;
   receiving (1120), from the plurality of service providing agents, advertised levels of performance in response to the request; and
   comparing (1130) the predicted level of performance with the advertised levels of performance of the plurality of service providing agents to select (1140) one of the plurality of service providing agents to service the request, wherein if none of the plurality of service providing agents satisfies the predicted level of performance, the service requesting agent negotiates with one or more agents from the plurality of service providing agents for a different level of performance that is acceptable to the service requesting agent.

22. The computer-implemented method of claim 21, further comprising employing a stochastic algorithm to specify uptime for the service requesting agent, wherein the uptime is utilized to facilitate determining whether one or more of the plurality of service providing agents can satisfy the predicted level of performance of the service requesting agent.

23. The computer-implemented method of claim 21, further comprising employing a stochastic algorithm to specify capacity for the service requesting agent, wherein the capacity is utilized to facilitate determining whether one or more of the plurality of service providing agents can satisfy the predicted level of performance of the service requesting agent.

24. The computer-implemented method of claim 21, further comprising specifying the predicted level of performance in a contract, said contract further comprising at least one of a message content description, an agent location, and a communication protocol.

25. The computer-implemented method of claim 21, further comprising:

specifying the contract in at least a fragment of process algebra;
employing performance predicting techniques to predict an implementation of the contract; and
measuring the implementation of the contract against the specified contract to determine whether the specified contract and implementation thereof satisfy each other.

26. The computer-implemented method of claim 25, wherein the process algebra is a stochastic pi calculus with semantics that provide for a Gillespie-style stochastic agent-based simulation.

27. The computer-implemented method of claim 25, further comprising employing the process algebra to associate proof-trees with transitions in a labeled transition system that corresponds to an execution of a pi calculus process.

28. A computer readable medium storing computer executable instructions which, when executed on a computer, cause the computer to perform the method of any of claims 21 to 27.


**Patentansprüche**

1. Computerimplementiertes System, das ein Leistungsniveau zur Erleichterung der Auswahl eines Dienstbereitstellers (service provider) einsetzt, umfassend:

eine erste Entität (310; 405), die dafür ausgelegt ist, eine Anfrage an eine Mehrzahl von dienstbereitstellenden Entitäten (350; 410 bis 445) rundzusenden, wobei die Anfrage ein Leistungsniveau im Zusammenhang mit der ersten Entität beinhaltet,
wobei die erste Entität umfasst:

eine Beschreibungskomponente (210; 330; 460), die ausgelegt ist zum Speichern eines Vertrages, wobei der Vertrag eine Definition des Leistungsniveaus im Zusammenhang mit der ersten Entität beinhaltet, wobei das Leistungsniveau unter Verwendung eines stochastischen mathematikbasierten Algorithmus vorhergesagt wird; und
einen Dienstverwalter (service manager) (110; 320; 455), der ausgelegt ist zum Einsetzen der Definition zur Auswahl von einer aus der Mehrzahl von dienstbereitstellenden Entitäten zur Bedienung der Anfrage durch Vergleichen der Definition des Leistungsniveaus im Zusammenhang mit der ersten Entität mit Geboten,
die von der Mehrzahl von dienstbereitstellenden Entitäten in Reaktion auf die Anfrage abgegeben werden, wobei jedes der Gebote ein jeweiliges abgegebenes Leistungsniveau der jeweiligen dienstbereitstellenden Entität umfasst,
wobei dann, wenn keines der abgegebenen Leistungsniveaus das Leistungsniveau im Zusammenhang mit der ersten Entität erfüllt, die erste Entität mit einer oder mehreren Entitäten aus der Mehrzahl von dienstbereitstellenden Entitäten hinsichtlich eines anderen Leistungsniveaus, das für die erste Entität akzeptabel ist, verhandelt.

2. Computerimplementiertes System nach Anspruch 1, wobei das Leistungsniveau wenigstens eines von einer Ratenmetrik, einer Betriebszeitmetrik (uptime metric) und einer Kapazitätsleistungsmetrik umfasst, wobei die Ratenmetrik eine Menge von Ressourcen angibt, die von der ersten Entität angefragt werden.

3. Computerimplementiertes System nach Anspruch 2, wobei die Ratenmetrik mit einer Prozessalgebra vorhergesagt wird.

4. Computerimplementiertes System nach Anspruch 3, wobei die Prozessalgebra ein Pi-Kalkül ist.

5. Computerimplementiertes System nach Anspruch 2, wobei die Ratenmetrik durch Bestimmen von einer oder mehreren Leistungsaufwendungen und Korrelieren der einen oder mehreren Aufwendungen mit jeweiligen Raten vorhergesagt wird.

6. Computerimplementiertes System nach Anspruch 5, wobei die eine oder die mehreren Aufwendungen durch rekursives Anwenden jeweiliger Aufwendungsfunktionen über Zustandsübergänge in der Definition berechnet werden.

7. Computerimplementiertes System nach Anspruch 1, wobei eine Ratenmetrik im Zusammenhang mit der ersten Entität mit Ratenmetriken der Mehrzahl von dienstbereitstellenden Entitäten verglichen wird, um zu bestimmen, ob eine oder mehrere aus der Mehrzahl von dienstbereitstellenden Entitäten das Leistungsniveau der ersten Entität erfüllt, wobei die Ratenmetrik im Zusammenhang mit der ersten Entität eine Menge von Ressourcen angibt, die von der ersten Entität angefragt werden, und wobei die Ratenmetriken der Mehrzahl von dienstbereitstellenden Entitäten eine Menge von Ressourcen angibt, die die jeweilige aus der Mehrzahl von dienstbereitstellenden Entitäten zur Bedienung einer Anfrage aufwenden will.

8. Computerimplementiertes System nach Anspruch 2, wobei die Betriebszeitmetrik eine Fehlerhäufigkeit im Zusammenhang mit einer Nichtbetriebszeit (down time) und einem Ausnahmezustand angibt.

9. Computerimplementiertes System nach Anspruch 2, wobei die Betriebszeitmetrik durch Versehen von Übergängen in Fehlerzustände mit Raten und Bestimmen einer Frequenz im Zusammenhang mit Übergängen in die Fehlerzustände berechnet wird.

10. Computerimplementiertes System nach Anspruch 2, wobei die Betriebszeitmetrik im Zusammenhang mit der ersten Entität mit Betriebszeitmetriken der Mehrzahl von dienstbereitstellenden Entitäten verglichen wird, um zu bestimmen, ob eine oder mehrere aus der Mehrzahl von dienstbereitstellenden Entitäten das Leistungsniveau der ersten Entität erfüllt.

11. Computerimplementiertes System nach Anspruch 2, wobei die Kapazitätsmetrik eine Menge von Daten angibt, die zu einer gegebenen Zeit verarbeitet werden.

12. Computerimplementiertes System nach Anspruch 2, wobei die Kapazitätsmetrik durch Anwenden des Shannon'schen Theorems über einen Kanal berechnet wird.

13. Computerimplementiertes System nach Anspruch 1, wobei die erste Entität und die Mehrzahl von dienstbereitstellenden Entitäten Webdienste sind.

14. Computerimplementiertes System nach Anspruch 11, wobei die Definition der ersten Entität mit Implementierungen von Definitionen der Mehrzahl von dienstbereitstellenden Entitäten durch einen Konformanzalgorithmus vergleichen wird, um eine Bestimmung dahingehend zu erleichtern, ob eine oder mehrere aus der Mehrzahl von dienstbereitstellenden Entitäten das Leistungsniveau im Zusammenhang mit der ersten Entität erfüllt.

15. Computerimplementiertes System nach Anspruch 1, wobei die Definition im Zusammenhang mit der ersten Entität mit Definitionen von Leistungsniveaus der Mehrzahl von dienstbereitstellenden Entitäten mit einem Komplianzalgorithmus verglichen wird, um zu bestimmen, ob die Definitionen funktionale Äquivalente sind.

16. Computerimplementiertes System nach Anspruch 1, des Weiteren umfassend:

eine erste Komponente, die dafür ausgelegt ist, eine Prozessalgebra zum Spezifizieren des Vertrages in wenigstens einem Fragment der Prozessalgebra einzusetzen, und
eine zweite Komponente, die dafür ausgelegt ist, den spezifizierten Vertrag mit einer über Leistungsvorhersagetechniken erzeugten Implementierung zu vergleichen, wobei ein Ergebnis des Vergleiches bestimmt, ob die Implementierung den Vertrag erfüllt.

17. Computerimplementiertes System nach Anspruch 16, wobei die Prozessalgebra ein stochastischer Pi-Kalkül ist.

18. Computerimplementiertes System nach Anspruch 16, wobei die Prozessalgebra mit Semantiken in Zusammenhang steht, die eine stochastische agentenbasierte Simulation nach Gillespie-Art bereitstellen.

19. Computerimplementiertes System nach Anspruch 16, wobei die Prozessalgebra Operationssemantiken beinhaltet, die Beweisbäume (proof trees) mit Übergängen in einem gekennzeichneten Übergangssystem (labeled transition system) entsprechend einer Ausführung eines prozessalgebrabasierten Prozesses in Zusammenhang bringen.

20. Computerimplementiertes System nach Anspruch 19, wobei der prozessalgebrabasierte Prozess ein Pi-Kalkül-Prozess ist.

21. Computerimplementiertes Verfahren, das ein Leistungsniveau zur Erleichterung der Auswahl eines dienstbereitstellenden Agenten einsetzt, umfassend:

Einsetzen eines stochastischen mathematikbasierten Algorithmus zur Vorhersage eines Leistungsniveaus für einen Agenten (310; 405), der einen Dienst anfragt;
durch den dienstanfragenden Agenten erfolgendes Rundsenden (1110) einer Anfrage an eine Mehrzahl von dienstbereitstellenden Agenten (350; 410 bis 445), wobei die Anfrage das Leistungsniveau für den dienstanfragenden Agenten beinhaltet;
von der Mehrzahl von dienstbereitstellenden Agenten her erfolgendes Empfangen (1120) von abgegebenen Leistungsniveaus in Reaktion auf die Anfrage; und Vergleichen (1130) des vorhergesagten Leistungsniveaus mit den abgegebenen Leistungsniveaus der Mehrzahl von dienstbereitstellenden Agenten, um einen aus der Mehrzahl von dienstbereitstellenden Agenten zur Bedienung der Anfrage auszuwählen (1140), wobei dann, wenn keiner aus der Mehrzahl von dienstbereitstellenden Agenten das vorhergesagte Leistungsniveau erfüllt, der dienstanfragende Agent mit einem oder mehreren Agenten aus der Mehrzahl von dienstbereitstellenden Agenten hinsichtlich eines anderen Leistungsniveaus, das für den dienstanfragenden Agenten akzeptabel ist, verhandelt.

22. Computerimplementiertes Verfahren nach Anspruch 21, des Weiteren umfassend ein Einsetzen eines stochastischen Algorithmus zum Spezifizieren einer Betriebszeit für den dienstanfragenden Agenten, wobei die Betriebszeit zur Erleichterung einer Bestimmung dahingehend eingesetzt wird, ob einer oder mehrere aus der Mehrzahl von dienstbereitstellenden Agenten das vorhergesagte Leistungsniveau des dienstanfragenden Agenten erfüllen kann.

23. Computerimplementiertes Verfahren nach Anspruch 21, des Weiteren umfassend ein Einsetzen eines stochastischen Algorithmus zum Spezifizieren einer Kapazität für den dienstanfragenden Agenten, wobei die Kapazität zur Erleichterung einer Bestimmung dahingehend eingesetzt wird, ob einer oder mehrere aus der Mehrzahl von dienstbereitstellenden Agenten das vorhergesagte Leistungsniveau des dienstanfragenden Agenten erfüllen kann.

24. Computerimplementiertes Verfahren nach Anspruch 21, des Weiteren umfassend ein Spezifizieren des vorhergesagten Leistungsniveaus in einem Vertrag, wobei der Vertrag des Weiteren wenigstens eines von einer Mitteilungsinhaltsbeschreibung, einem Ort des Agenten und einem Kommunikationsprotokoll umfasst.

25. Computerimplementiertes Verfahren nach Anspruch 21, des Weiteren umfassend:

Spezifizieren des Vertrages in wenigstens einem Fragment einer Prozessalgebra;
Einsetzen von Leistungsvorhersagetechniken zum Vorhersagen einer Implementierung des Vertrages; und
Messen der Implementierung des Vertrages bezüglich des spezifizierten Vertrages, um zu bestimmen, ob der spezifizierte Vertrag und die Implementierung hiervon einander erfüllen.

26. Computerimplementiertes Verfahren nach Anspruch 25, wobei die Prozessalgebra ein stochastischer Pi-Kalkül mit Semantiken ist, die eine stochastische agentenbasierte Simulation nach Gillespie-Art bereitstellen.

27. Computerimplementiertes Verfahren nach Anspruch 25, des Weiteren umfassend ein Einsetzen der Prozessalgebra, um Beweisbäume (proof trees) mit Übergängen in einem gekennzeichneten Übergangssystem (labeled transition system), das einer Ausführung eines Pi-Kalkül-Prozesses entspricht, in Zusammenhang zu bringen.

28. Computerlesbares Medium zur Speicherung von computerausführbaren Anweisungen, die bei Ausführung auf einem Computer bewirken, dass der Computer das Verfahren nach einem der Ansprüche 21 bis 27 durchführt.

**Revendications**

1. Système mis en oeuvre par un ordinateur qui utilise un niveau de performance pour faciliter la sélection d'un fournisseur de service, comprenant :

   une première entité (310 ; 405) adaptée pour diffuser une demande à une pluralité d'entités de fourniture de service (350 ; 410-445), la demande comprenant un niveau de performance associé à la première entité, la première entité comprenant :

   un composant de description (210 ; 330 ; 460) adapté pour stocker un contrat, ledit contrat comprenant une définition du niveau de performance associé à la première entité, le niveau de performance étant prévu en utilisant un algorithme stochastique sur base mathématique ; et
   un gestionnaire de service (110 ; 320 ; 455) adapté pour utiliser la définition afin de sélectionner une entité parmi ladite pluralité d'entités de fourniture de service pour traiter la demande en comparant ladite définition du niveau de performance associé à la première entité aux offres annoncées par la pluralité d'entités de fourniture de service, en réponse à la demande, chacune desdites offres comprenant un niveau de performance respectif annoncé par l'entité de fourniture de service respective,
   dans lequel, lorsqu'aucun des niveaux de performance annoncés ne satisfait au niveau de performance associé à la première entité, la première entité négocie avec une ou plusieurs entités, parmi la pluralité d'entités de fourniture de service, un niveau de performance différent qui est acceptable pour la première entité.

2. Système mis en oeuvre par un ordinateur selon la revendication 1, dans lequel le niveau de performance comprend au moins un indicateur parmi un indicateur de débit, un indicateur de temps de fonctionnement et un indicateur de performance de capacité, ledit indicateur de débit indiquant une quantité de ressources demandées par la première entité.

3. Système mis en oeuvre par un ordinateur selon la revendication 2, dans lequel l'indicateur de débit est prévu par de l'algèbre de processus.

4. Système mis en oeuvre par un ordinateur selon la revendication 3, dans lequel l'algèbre de processus est un Pi-calcul.

5. Système mis en oeuvre par un ordinateur selon la revendication 2, dans lequel l'indicateur de débit est prévu en déterminant un ou plusieurs coûts d'exécution et en mettant lesdits un ou plusieurs coûts en corrélation avec des débits respectifs.

6. Système mis en oeuvre par un ordinateur selon la revendication 5, dans lequel lesdits un ou plusieurs coûts sont calculés en appliquant de manière récursive des fonctions de coût respectives sur des transitions d'état dans la définition.

7. Système mis en oeuvre par un ordinateur selon la revendication 1, dans lequel un indicateur de débit associé à la première entité est comparé à des indicateurs de débit de la pluralité d'entités de fourniture de service pour déterminer si une ou plusieurs entités parmi la pluralité d'entités de fourniture de service satisfont ou non au niveau de performance de la première entité, dans lequel l'indicateur de débit associé à la première entité indique une quantité de ressources demandée par la première entité, et dans lequel les indicateurs de débit de la pluralité d'entités de fourniture de service indiquent une quantité de ressources que l'entité respective de la pluralité d'entités de fourniture de service est prête à dépenser pour traiter une demande.

8. Système mis en oeuvre par un ordinateur selon la revendication 2, dans lequel l'indicateur de temps de fonctionnement indique une fréquence d'erreur qui est associée à un paramètre parmi un temps d'arrêt et un état d'exception.

9. Système mis en oeuvre par un ordinateur selon la revendication 2, dans lequel l'indicateur de temps de fonctionnement est calculé en attribuant des débits à des transitions vers des états d'erreur, et en déterminant une fréquence associée à des transitions vers des états d'erreur.

10. Système mis en oeuvre par un ordinateur selon la revendication 2, dans lequel l'indicateur de temps de fonctionnement associé à la première entité est comparé à des indicateurs de temps de fonctionnement de la pluralité d'entités de fourniture de service pour déterminer si une ou plusieurs entités parmi la pluralité d'entités de fourniture de service satisfont ou non au niveau de performance de la première entité.

11. Système mis en oeuvre par un ordinateur selon la revendication 2, dans lequel l'indicateur de capacité indique une quantité de données qui est traitée à un temps donné.

12. Système mis en oeuvre par un ordinateur selon la revendication 2, dans lequel l'indicateur de capacité est calculé en appliquant le théorème de Shannon sur un canal.

13. Système mis en oeuvre par un ordinateur selon la revendication 1, dans lequel la première entité et la pluralité d'entités de fourniture de service sont des services Web.

14. Système mis en oeuvre par un ordinateur selon la revendication 11, dans lequel la définition de la première entité est comparée à des implémentations de définitions de la pluralité d'entités de fourniture de service via un algorithme de conformité pour faciliter la détermination du fait qu'une ou plusieurs entités parmi la pluralité d'entités de fourniture de service satisfont ou non au niveau de performance associé à la première entité.

15. Système mis en oeuvre par un ordinateur selon la revendication 1, dans lequel la définition associée à la première entité est comparée à des définitions de niveaux de performance de la pluralité d'entités de fourniture de service à l'aide d'un algorithme de conformité pour déterminer si les définitions sont ou non des équivalents fonctionnels.

16. Système mis en oeuvre par un ordinateur selon la revendication 1, comprenant en outre :

un premier composant adapté pour utiliser l'algèbre de processus afin de spécifier le contrat dans au moins un fragment de l'algèbre de processus, et
un deuxième composant adapté pour comparer le contrat spécifié à une implémentation générée via des techniques de prévision de performances, dans lequel un résultat de la comparaison détermine si l'implémentation satisfait ou non au contrat.

17. Système mis en oeuvre par un ordinateur selon la revendication 16, dans lequel l'algèbre de processus est un Pi-calcul stochastique.

18. Système mis en oeuvre par un ordinateur selon la revendication 16, dans lequel l'algèbre de processus est associée à des sémantiques qui fournissent une simulation stochastique sur base d'agents de style Gillespie.

19. Système mis en oeuvre par un ordinateur selon la revendication 16, dans lequel l'algèbre de processus comprend des sémantiques opérationnelles qui associent des arbres de preuve à des transitions dans un système de transition étiqueté correspondant à une exécution de processus basé sur l'algèbre de processus.

20. Système mis en oeuvre par un ordinateur selon la revendication 19, dans lequel le processus basé sur l'algèbre de processus est un processus de Pi-calcul.

21. Procédé mis en oeuvre par un ordinateur qui utilise un niveau de performance pour faciliter la sélection d'un agent fournisseur de service, comprenant :

l'utilisation d'un algorithme stochastique sur base mathématique pour prévoir un niveau de performance pour un agent (310 ; 405) demandant un service ;
la diffusion (1110), par l'agent demandant un service, d'une demande à une pluralité d'agents fournisseurs de service (350 ; 410-445),
la demande comprenant le niveau de performance pour l'agent demandant un service ;
la réception (1120), en provenance de la pluralité d'agents fournisseurs de service, de niveaux de performance annoncés en réponse à la demande ; et
la comparaison (1130) du niveau de performance prévu avec les niveaux de performance annoncés de la pluralité d'agents fournisseurs de service, pour sélectionner (1140) un agent parmi la pluralité d'agents fournisseurs de service afin de traiter la demande, dans lequel, si aucun agent parmi la pluralité d'agents fournisseurs de service ne satisfait au niveau de performance prévu, l'agent demandant un service négocie avec un ou plusieurs agents, parmi la pluralité d'agents fournisseurs de service, un niveau de performance différent qui est acceptable pour l'agent demandant un service.

22. Procédé mis en oeuvre par un ordinateur selon la revendication 21, comprenant en outre l'utilisation d'un algorithme stochastique pour spécifier un temps de fonctionnement pour l'agent demandant un service, dans lequel le temps de fonctionnement est utilisé pour faciliter la détermination du fait qu'un ou plusieurs agents parmi la pluralité d'agents fournisseurs de service peuvent ou non satisfaire au niveau de performance prévu de l'agent demandant un service.

23. Procédé mis en oeuvre par un ordinateur selon la revendication 21, comprenant en outre l'utilisation d'un algorithme stochastique pour spécifier une capacité pour l'agent demandant un service, dans lequel la capacité est utilisée pour faciliter la détermination du fait qu'un ou plusieurs agents parmi la pluralité d'agents fournisseurs de service peuvent satisfaire ou non au niveau de performance prévu de l'agent demandant un service.

24. Procédé mis en oeuvre par un ordinateur selon la revendication 21, comprenant en outre la spécification du niveau de performance prévu dans un contrat, ledit contrat comprenant en outre au moins un paramètre parmi une description de contenu de message, un emplacement d'agent et un protocole de communication.

25. Procédé mis en oeuvre par un ordinateur selon la revendication 21, comprenant en outre :

la spécification du contrat dans au moins un fragment d'algèbre de processus ;
l'utilisation de techniques de prévision de performance pour prévoir une implémentation du contrat ; et
la mesure de l'implémentation du contrat par rapport au contrat spécifié pour déterminer si le contrat spécifié et son implémentation se satisfont mutuellement ou non.

26. Procédé mis en oeuvre par un ordinateur selon la revendication 25, dans lequel l'algèbre de processus est un Pi-calcul stochastique avec des sémantiques qui fournissent une simulation stochastique sur base d'agents de style Gillespie.

27. Procédé mis en oeuvre par un ordinateur selon la revendication 25, comprenant en outre l'utilisation de l'algèbre de processus pour associer des arbres de preuve à des transitions, dans un système de transition étiqueté correspondant à une exécution d'un processus de Pi-calcul.

28. Support lisible par un ordinateur stockant des instructions exécutables par un ordinateur qui, lorsqu'elles sont exécutées par un ordinateur, commandent à l'ordinateur de mettre en oeuvre le procédé selon l'une quelconque des revendications 21 à 27.

**FIG. 1**

EP 1 545 066 B1

**200**

AGENT ⟷ INTERFACE **120** ⟷ SERVICE MANAGER **110**

DESCRIPTION **210**

IMPLEMENTATION **220**

## FIG. 2

EP 1 545 066 B1

**300**

**310**
FIRST AGENT

**320**
SERVICE
MANAGER

**330**
DESCRIPTION

**340**
IMPLEMENTATION

**350**
SECOND AGENT

**360**
SERVICE
MANAGER

**370**
DESCRIPTION

**380**
IMPLEMENTATION

# FIG. 3

FIG. 4

**FIG. 5**

EP 1 545 066 B1

**600**

AGENT
**455**

SERVICE
MANAGER

**460**

DESCRIPTION

**465**

IMPLEMENTATION

**405**

AGENT ~ **410**

AGENT ~ **445**

RATE

**510**

UPTIME ~ **610**

# FIG. 6

**FIG. 7**

800

INITIALIZE — 810

INIT

— 840

DOWORK — 820

WORK$_A$
— 850

FIN
— 870

WORK$_B$
— 860

FINALIZE — 830

**FIG. 8**

900

INITIALIZE

INIT

__. — 910

DOWORK

920 —
__.+1

940 —
__.+3

WORK$_A$

FIN
__.+2 — 930

WORK$_B$

FINALIZE

**FIG. 9**

1000

SET-UP
AGENT — 1010

SPECIFY
PERFORMANCE — 1020

ADVERTISE
PERFORMANCE — 1030

# FIG. 10

1100

TRANSMIT ASK /
RECEIVE BID — 1110

DETERMINE AGENT
PERFORMANCE LEVEL — 1120

COMPARE
PERFORMANCE
LEVELS — 1130

SELECT
SERVICE PROVIDER — 1140

# FIG. 11

1200

1210

ADVERTISE
SERVICE LEVEL

1220

DETERMINE
REQUESTED
SERVICE LEVEL

1230

ADVERTISE
COST OF SERVICE

# FIG. 12

FIG. 13

EP 1 545 066 B1

1400

1428
Operating System

1430
Applications

1432
Modules

1434
Data

1412

1414
Processing Unit

1442
Output Adapter(s)

Output Device(s)
1440

1416
System Memory

Volatile
1420

Non Volatile
1422

1438
Interface Port(s)

Input Device(s)
1436

1418
Bus

Interface
1426

1450
Communication Connection(s)

Network Interface

1448

Disk Storage
1424

Remote Computer(s)

1444

Memory Storage

1446

FIG. 14

**EP 1 545 066 B1**

**REFERENCES CITED IN THE DESCRIPTION**

**Patent documents cited in the description**

- WO 0217065 A2
- US 6516322 B1
- EP 1385094 A
- WO 2004031970 A